# EUROPEAN PATENT APPLICATION

(11) **EP 3 388 228 A1**
(43) Date of publication of application: **17.10.2018**
(21) Application number: 17000619.1
(22) Date of filing: 12.04.2017
(51) Int. Cl.: B32B 5/02, B32B 5/26, B32B 15/14, B32B 15/20, B32B 19/04, B32B 19/06, B32B 3/12

(54) **FIRE RETARDANT COMPOSITE**

(71) Applicant: Huntsmann Advanced Materials Licensing (Switzerland) GmbH, 4057 Basel (CH)
(72) Inventor: The designation of the inventor has not yet been filed
(74) Representative: Potthoff, Siegfried

(57) **Abstract**

The invention relates to a fire-retardant composite material comprising a fibre-reinforced plastic covered by an aluminium foil and its application in passenger transport industries such as aerospace, railway or marine.

## Description

The present invention relates to a fire-retardant composite material and its application in the transportation industry.

Composite materials are presently produced, for example, by impregnating a fabric of carbon, glass, aramide or natural fibers with a liquid curable system comprising typically an thermosetting resin in combination with a suitable hardener and afterwards curing the impregnated fabric at room temperature or higher temperatures for few minutes up to some days.

Methods for preparing such composites can be found for example in US 4 107 128 or US 6 485 834.

Typical reinforcements of composites are carbon, glass, aramide or natural fibers, while typical curable systems comprise, for example, epoxy resins, phenolic resins, polyurethanes and bezoxazines, if necessary in combination with suitable hardeners, which after curing build a solid matrix exhibiting mechanical strength and elastic properties.

Composite materials combine low weight with high mechanical stability and are therefore perfectly suitable for construction and transport (automotive, railway, navy, aerospace) applications.
However, the requirements with respect to fire resistance and flame retardance, in particular in applications for passengers transportation, are getting stricter and conventional thermosetting materials based on phenolic resins do not combine fire resistance performance, high thermo-mechanical performance and processing via direct liquid processes. Other thermoset solutions suitable for direct liquid processing and providing high mechanical performance do not pass the most stringent FST (fire, smoke, toxicity) and HR (heat release) tests.

Accordingly, there is a demand for a composite material which fulfils the strictest FST and HR requirements and concurrently exhibits outstanding thermomechanical properties when the matrix is processes by direct liquid process (in opposition to indirect process such a prepregs).

It has now been found that this problem can be solved by incorporation of a thin aluminium foil at a certain position of the composite.

The invention relates to a fire-retardant composite material comprising a fibre-reinforced plastic covered by an aluminium foil.
According to a preferred embodiment of the invention, the fibre-reinforced plastic comprises carbon, glass, natural fibres or synthetic fibres, e.g. aramide fibres.

Especially preferred are glass fibres and, in particular, carbon fibres.

Such fibers allow for the required mechanical strength.
According to a further preferred embodiment of the invention, the composite material comprises 20 to 80 vol. %, preferably 35 to 65 vol.%, more preferably 40 to 60 vol.% of fibers, based on the total volume of the composite.
If the volume percentage of fibers is too high, there will be not enough matrix to transfer efforts between the fibres. If the volume fraction of fibers is too low, the quantity of resin will be favourable to burning behavior.

In a preferred embodiment, the composite material has a monolithic structure, wherein the aluminium foil is covered by a further sheet of fibre-reinforced plastic.

In a further preferred embodiment, the composite material has a sandwich structure, wherein an inner core is coated on both sides with a fibre-reinforced plastic and the outer surface of the assembly is covered by an aluminium foil.

Purposively, in said composite material having a sandwich structure the aluminium foil is covered by a further sheet of fibre-reinforced plastic, preferably mineral-fibre-reinforced plastic, in particular glass-fibre-reinforced plastic.

Matrix resins for the preparation of the fibre-reinforced plastic are well-know to the skilled artisan.
Phenolic resins provide satisfactory FST and HR tests, but the mechanical properties of the cured products are inadequate for certain applications.

The thermomechanical properties of products obtained from benzoxazines as matrix resin are good. However, the curing rates of benzoxazines are unacceptably low.

For these reasons, epoxy resins are the preferred matrix resins.

Recently, a class of epoxy resins which are particularly suitable for automotive, marine and aerospace applications requiring high FST and HR standars, have been offered under the designation ARALDITE^{®} FST (supplied by Huntsman, Switzerland).

The quality and the thickness of the aluminium foil basically is not critical for the concept of the invention. However, in view of the desired low weight of the composite the thickness of the foil should not exceed 5.0 mm.

Preferably, the foil has a thickness of 0.01 mm - 5.0 mm, more preferably 0.02 - 0.5 mm, in particular 0.05 mm - 0.3 mm.

The impregnation and curing process is well-known in the art and sufficiently described in the technical literature.

The following Examples serve to illustrate the invention. Unless otherwise indicated, the temperatures are given in degrees Celsius, parts are parts by weight and percentages relate to % by weight. Parts by weight relate to parts by volume in a ratio of kilograms to litres.

### Example 1

One layer of carbon fabric (300 g/m²) covered by 2 layers of glass fabric (600 g/m² each). An aluminium foil of 0.1 mm thickness is positioned above the glass fabrics and a glass fabric (50 - 90 g/m²) is placed on the other side of the aluminium foil, The composite lay-up so obtained is impregnated with a liquid epoxy resin (ARALDITE^{®} FST 40002/LME 11227), flame resistant resin supplied by Huntsman, Switzerland). Subsequently, the composite material is cured (12 min/130 °C and 3 h/165 °C).

### Example 2

Example 1 is repeated with an additional decorative layer applied on the surface of the 50 - 90 g/m² glass fabric.

### Comparative Example 1

Example 1 is repeated under omission of the aluminium foil.

### Comparative Example 2

Example 2 is repeated under omission of the aluminium foil.

### Example 3

A composite sandwich structure is prepared by applying a layer of carbon fabric (300 g/m²) on one side of a core consisting of a 3 mm thick PEI (polyetherimide) honeycomb. A layer of glass fabric (220 g/m²) is applied on the other side of the core. An aluminium foil of 0.05 mm thickness is applied on the outer surface of glass fabric and a glass fabric (50 - 90 g/m²) is placed on the other side of the aluminium foil. The composite material so obtained is impregnated with the liquid epoxy resin. Subsequently, the composite material is cured (12 min/130 °C and 3 h/165 °C).

### Example 4

Example 3 is repeated with an additional decorative layer applied on the surface of the glass fabric.

### Comparative Example 3

Example 3 is repeated under omission of the aluminium foil.

The cured composites are tested with respect to aerospace standard FAR25-853 (Heat release tests). The results are summarized in Table 1.

| | Ex.1 | Comp. Ex. 1 | Ex. 2 | Comp. Ex. 2 | Ex. 3 | Comp. Ex. 3 | Ex. 4 |
|---|---|---|---|---|---|---|---|
| HR/kWmin/m² | 26.5 | 49.3 | 53.7 | 65.9 | 56.2 | 68.6 | 65.0 |
| HRR/kW/m² | 35.7 | 52.2 | 53.9 | 75.0 | 56.1 | 57.7 | 58.3 |
| Peak time/s | 104.0 | 52.0 | 45.0 | 42.0 | 78.0 | 73.0 | 27.0 |

| | | | | | | | |
|---|---|---|---|---|---|---|---|
| HR: Heat release HRR: Heat release rate | | | | | | | |

For aerospace applications usually values HR < 65 kWmin/m² and HRR < 65 kW/m² are required.

## Claims

1. A fire-retardant composite material comprising a fibre-reinforced plastic covered by an aluminium foil.

2. A composite material according to claim 1 having a monolithic structure, wherein the aluminium foil is covered by a further sheet of fibre-reinforced plastic.

3. A composite material according to claim 1 having a sandwich structure, wherein an inner core is coated on both sides with a fibre-reinforced plastic and the outer surface of the assembly is covered by an aluminium foil.

4. A composite material according to claim 3, wherein the aluminium foil is covered by a further sheet of fibre-reinforced plastic.

5. A composite material according to claim 4, wherein said further sheet contains mineral-fibre-reinforced plastic.

6. A composite material according to any of claims 1 - 5, wherein the fibre-reinforced plastic contains an thermosetting resin as matrix resin.

7. A composite material according to any of claims 1 - 6, wherein the fibre-reinforced plastic contains an epoxy resin as matrix resin.

8. A composite material according to any of claims 1 - 7, wherein the aluminium foil has a thickness of 0.01 mm - 5.0 mm.
